**Europäisches Patentamt**

**European Patent Office**

**Office européen des brevets**

(19)

(11) Veröffentlichungsnummer: **0 136 432**
**A1**

## (12) EUROPÄISCHE PATENTANMELDUNG

(21) Anmeldenummer: **84108515.2**

(22) Anmeldetag: **19.07.84**

(51) Int. Cl.⁴: **C 03 B 23/02**
**B 65 H 31/34**

(30) Priorität: **10.08.83 DE 3328818**

(43) Veröffentlichungstag der Anmeldung:
**10.04.85 Patentblatt 85/15**

(84) Benannte Vertragsstaaten:
**BE FR GB IT**

(71) Anmelder: **Grenzebach, Rudolf**
**Postfach 11 55**
**D-8854 Asbach-Bäumenheim/Hamlar(DE)**

(72) Erfinder: **Grenzebach, Rudolf**
**Postfach 11 55**
**D-8854 Asbach-Bäumenheim/Hamlar(DE)**

(54) **Verfahren und Vorrichtung zum Zentrieren von zwei aufeinanderliegenden Glasscheiben.**

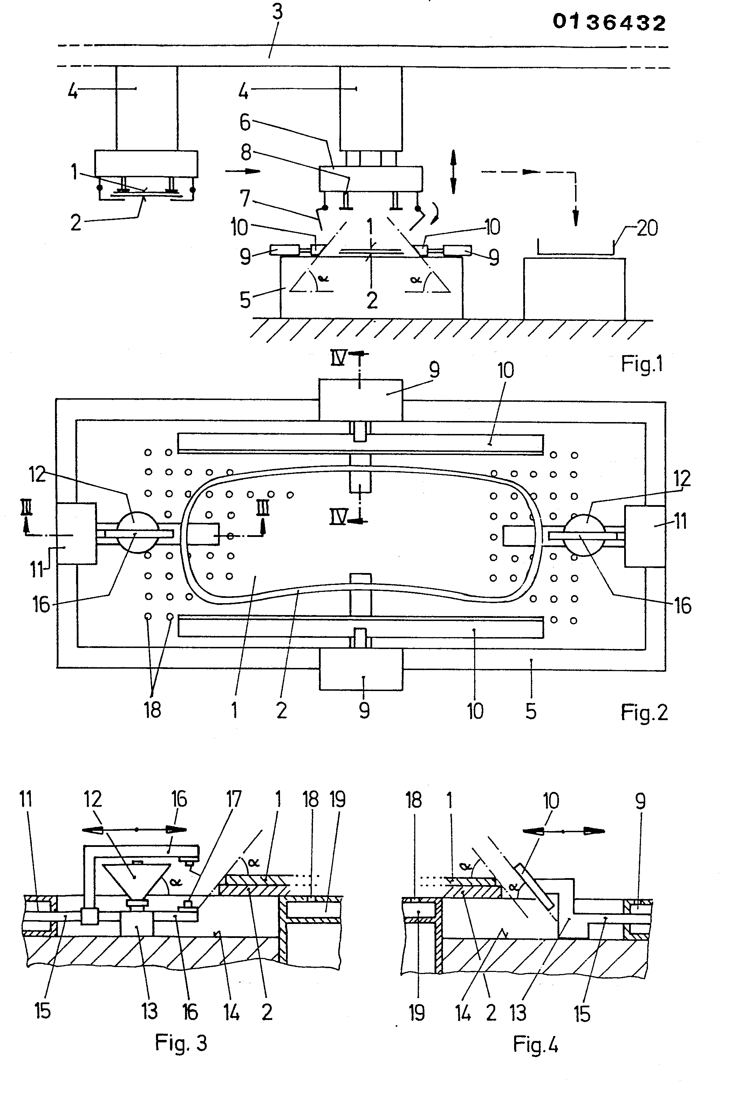

(57) Die Erfindung betrifft ein Verfahren und eine Vorrichtung zum Zentrieren von zwei planen, aufeinanderliegenden Glasscheiben gleicher Umrißform, von denen die eine eine etwas größere Fläche als die andere aufweist. Zur Herstellung von Verbundglasscheiben müssen die zunächst ebenen Scheiben relativ zueinander so zentriert werden, daß sie überall voneinander gleichen Randabstand aufweisen, worauf sie dann in eine Form gelegt und in einem Biegeofen in bekannter Weise gebogen werden. Gemäß der Erfindung wird auf einer horizontalen Fläche die kleinere (1) auf die größere Scheibe (2) gelegt. Durch geeignete Antriebe (9,11) werden von gegenüberliegenden Seiten her gegen die Ränder der aufeinanderliegenden Scheiben Anschlagelemente (10, 12) angedrückt, die eine zu den Scheiben hingeneigte, schräge Andrückfläche oder -kante aufweisen, deren Neigung ($\alpha$) der Neigung der Tangente an die beiden Oberkanten der Ränder der in zentrierter Lage befindlichen Scheiben (1, 2) entspricht. Hierdurch kann ein maschinelles Zentrieren der Scheiben erreicht werden (Figur 1).

EP 0 136 432 A1

./...

Fig.1

0136432

Verfahren und Vorrichtung zum Zentrieren
von zwei aufeinanderliegenden Glasscheiben

Die Erfindung betrifft ein Verfahren zum Zentrieren
von zwei planen, aufeinanderliegenden Glasscheiben
mit gleicher Umrißform, von denen die eine eine etwas kleinere Fläche hat als die andere, die für das
Biegen zwecks Herstellung von Windschutzscheiben aus
Verbundglas relativ zueinander derart verschoben
werden, daß der Rand am Umfang der einen Scheibe
vom Rand der anderen mindestens im Biegebereich überall gleichen Abstand aufweist, sowie Vorrichtungen
zur Durchführung dieses Verfahrens. Dieses Zentrieren erfolgt bisher von Hand. Nach dem Zentrieren werden die beiden Scheiben in ihrer zentrierten Soll-
Lage festgehalten und in dieser Lage in eine Biegeform eingelegt und in einen Biegeofen gebracht. Unter dem Einfluß der Wärme im Biegeofen biegen sich
bekannterweise die beiden Scheiben in der Form, so
daß schließlich wegen des unterschiedlichen Biegeradius der oberen bzw. inneren Scheibe und der unteren bzw. äußeren Scheibe nach dem Biegen die Scheibenränder am Umfang ungefähr miteinander bündig sind.

Das Zentrieren von Hand ist aufwendig und teuer.
Der Erfindung liegt daher die Aufgabe zugrunde, ein
Verfahren zum maschinellen Zentrieren der beiden
Scheiben zu schaffen, das rasch und einfach durchführbar ist und dadurch in Verbindung mit an sich
bekannten Mitteln zum Erfassen und Transportieren
von Scheiben oder Platten eine automatische Beschikkung eines Biegeofens von einem Vorrat gestapelter
Scheiben aus ermöglicht.

- 2 -

Die erfindungsgemäße Lösung dieser Aufgabe besteht darin, daß auf einer horizontalen Fläche die kleinere auf die größere Scheibe aufgelegt wird und an jeweils gegenüberliegenden Stellen des Umfanges mindestens in einer Richtung, vorzugsweise jedoch in Längs- und Querrichtung, gegen die Scheibenränder eine schräg zu den Scheiben hingeneigte Anschlagkante oder -fläche angedrückt wird, deren Schrägneigung der Richtung der Tangente an die beiden jeweiligen Oberkanten der Scheibenränder in der Soll-Lage entspricht. Durch den Druck der an gegenüberliegenden Stellen auf die Scheibenränder auftreffenden schrägen Anschlagkanten oder -flächen werden die beiden aufeinanderliegenden Scheiben relativ zueinander verschoben und dabei zentriert, da die Schrägneigung der Tangente an die Randoberkanten und damit der Differenz der Durchmesser in dieser Richtung entspricht. Es empfiehlt sich, die Scheiben nach dem Andrücken der Anschlagkanten oder -flächen bei Erreichen der Soll-Lage, also bei Erreichen des zentrierten Zustandes, gegeneinanderzupressen und in diesem aneinandergepressten Zustand zu halten, bis sie in dieser zentrierten Soll-Lage erfaßt und in die Biegeform gelegt werden können.

Eine Vorrichtung zur Durchführung dieses Verfahrens ist gemäß der Erfindung gekennzeichnet durch einen Auflagetisch oder ein sonstiges entsprechendes Gestell, welches eine Auflagefläche für die Scheiben bildet, auf dessen Oberfläche jeweils von gegenüberliegenden Stellen des Tischrandes je ein Anschlagelement durch mindestens einen Antrieb in Richtung von außen, also von der Tischaußenseite, nach innen zur Tischmitte hin- und zurückbewegbar ist, das eine zur Tischebene um einen Winkel Alpha geneigte Anschlagfläche oder -kante aufweist, deren Neigung der Neigung der Tangente an die Oberkanten der Ränder

- 3 -

der in Soll-Lage, also im zentrierten Zustand befindlichen beiden Scheiben entspricht. Die beiden Scheiben werden also auf die Tischfläche
aufgelegt. Dies kann mit an sich bekannten Mitteln
zur Handhabung von Platten oder dergleichen erreicht werden, die die Scheiben vom Stapel in der
richtigen Reihenfolge und Anordnung abnehmen und
zuführen, sodaß immer die kleinere Scheibe auf der
größeren zu liegen kommt. Alsdann werden die Antriebe eingeschaltet, sodaß sich die Anschlagelemente in der Tischebene von außen zur Mitte hin
gegen die Scheibenränder bewegen und gegen diese
mit ihren Schrägflächen auftreffen.

Wenn der Widerstand, der beim Auftreffen der Anschlagelemente auf die Scheibenränder, der an den
Antrieben gemessen wird, größer wird als die erforderliche Kraft zum Verschieben der Scheiben,
wird die Bewegung gestoppt. Sobald die auf diese
Weise zentrierten Scheiben von an sich bekannten
Greifeinrichtungen erfaßt worden sind und in der
zentrierten Soll-Lage entfernt werden können,
können auch die Antriebe für den Rücklauf der
Anschlagelemente eingeschaltet werden, sodaß sich
diese wieder zurück in ihre Ausgangspositionen
bewegen. Dieser Bewegungsablauf erfolgt durch an
sich bekannte Steuerungsmittel.

Erfindungsgemäß empfiehlt es sich, nicht nur in
einer, sondern in zwei zueinander senkrecht verlaufenden Vorschubrichtungen jeweils zwei in der
Tischebene bzw. in der horizontalen Auflagefläche
aufeinanderzu- und voneinanderwegbewegbare Anschlagelemente vorzusehen, sodaß die Zentrierung
der Scheiben relativ zueinander in beiden Dimensionen der Ebene vorgenommen werden kann. Zweckmäßigerweise sind die Anschlagelemente auswechselbar an ihren Antrieben befestigt, sodaß auch Scheiben mit verschiedener Durchmesserdifferenz und unterschiedlichen Dicken bzw. Randhöhen berücksichtigt werden können.

Im Rahmen der Erfindung können die Anschlagelemente verschieden ausgebildet sein. Bei einer vorteilhaften Ausführungsform der Erfindung ist beispielsweise das Anschlagelement als eine Kegelrolle ausgebildet, die mit ihrer Lagerung, gesteuert durch den Antrieb, in einer Führung von der Tischaußenseite zur Tischmitte hin- und herbewegbar ist. Hier wird jeweils durch eine Mantellinie der Kegelrolle eine Anschlagkante gebildet. Diese Ausführung eignet sich beispielsweise für die schmale Seite der Scheiben. Bei einer anderen erfindungsgemäßen Ausführungsform ist das Anschlagelement gebildet durch eine quer zur Vorschubrichtung sich erstreckenden Leiste, die sich z. B. zum Ausrichten und Zentrieren der Scheiben an den Längsrändern gut eignet.

In Weiterbildung der Erfindung ist vorgesehen, daß mindestens eines der Anschlagelemente mit einer zusammen mit ihm bewegbaren Klemmeinrichtung für die Scheiben verbunden ist. Mit einer solchen Klemmeinrichtung kann ein nachträgliches Rutschen der Scheiben relativ zueinander verhindert werden. Ferner besteht die Möglichkeit, daß in der Tischebene mit einer Druckgasquelle verbindbare Gasaustrittsöffnungen, z. B. Düsen, zur Erzeugung eines Gaspolsters vorgesehen sind.

Die Erfindung ist in der Zeichnung beispielsweise und schematisch dargestellt. Es zeigen:

Figur 1: Eine Seitenansicht einer erfindungsgemäßen Vorrichtung,

Figur 2: eine Draufsicht auf einen Auflagetisch,

Figur 3: eine Einzelheit eines Schnittes, entsprechend der Linie III - III in Figur 2,

Figur 4: eine Einzelheit eines Schnittes, entsprechend der Linie IV - IV in Figur 2.

Bei der Durchführung des erfindungsgemäßen Verfahrens werden die beiden Scheiben, bereits aufeinanderliegend - die kleinere oben, die größere unten - durch eine in einer Führung 3 laufenden Transporteinrichtung 4 gemäß der Pfeilrichtung in Figur 1 antransportiert und auf einen Auflagetisch 5 gelegt. An der Transporteinrichtung 4 sind die Scheiben 1,2 durch in einem auf- und abbewegbaren Rahmen 6 angeordnete, schwenkbare bzw. auf- und abbewegbare Greif- und Halteelemente 7 und 8 gehalten.

In dem dargestellten Beispiel gemäß Figur 1 wird nach dem Auflegen der Scheiben auf die Tischfläche jeweils ein Hubmotor 9 eingeschaltet, durch den jeweils von gegenüberliegenden Seiten des Tisches 6 zwei Anschlagelemente 10 gegen die Ränder der auf dem Tisch 5 liegenden Scheiben 1,2 vorbewegt werden. Die Anschlagelemente 10 haben eine schräge Anschlagfläche, deren Neigungswinkel Alpha gegenüber der Tischebene der Richtung der Tangente an die Randoberkanten der aufeinanderliegenden Scheiben 1,2 entspricht (vgl. auch z. B. Figur 4), wenn sich die Scheiben gerade in der Soll-Lage befinden, wenn also der Rand der oberen Scheibe auf beiden gegenüberliegenden Seiten gleichen Abstand vom Rand der unteren
Scheibe hat.

Beim Auftreffen der Anschlagflächen auf die Scheibenränder werden die Scheiben solange sie noch unzentriert aufeinanderliegen, soweit relativ zueinander verschoben, bis die zentrierte Lage (Soll-
Lage) erreicht ist, in der der Abstand der Ränder
auf jeder Seite der Neigung der Schrägflächen der
Anschlagelemente 10 entspricht (z. B. Figur 4).

In der zur Richtung dieses Andrückvorganges quer
verlaufenden Richtung sind ebenfalls auf den beiden gegenüberliegenden Seiten von Hubmotoren 11
von außen her gegen die Scheibenränder auf der
Tischfläche bewegbare Anschlagelemente 12 vorgesehen, die ungefähr gleichzeitig mit den Anschlagelementen 10 gegen die Scheibenränder in Bewegung
gesetzt werden.

Bei der Draufsicht gemäß Figur 2 ist lediglich aus
Platzgründen der Tisch 5 um 90 Grad gegenüber der
Anordnung in Figur 1 gedreht. Der Randabstand, der
hier in bereits zentrierter Lage gezeichneten Scheiben 1 und 2 ist deutlich erkennbar. Bei diesem Ausführungsbeispiel sind die Anschlagelemente 10 jeweils
als eine Leiste, die Anschlagelemente 12 jeweils als
eine Kegelrolle ausgebildet. Letztere bildet jeweils
mit ihrer auf die Scheiben auftreffenden Mantellinie
eine Anschlagkante zum Ausrichten der aufeinanderliegenden Scheiben 1,2.

Die Antriebe 9 und 11, die in Figur 2 der Übersichtlichkeit halber nur schematisch als Rechtecke gezeichnet sind, sind in Figur 3 und 4 als pneumatische
Zylinder dargestellt, die jeweils am äußeren Ende
ihrer Kolbenstange 15 die Anschlagelemente, jeweils
eine Leiste 10 bzw. eine Kegelrolle 12 tragen und diese gemäß Pfeilrichtung bewegen können. Die Kolbenstange 15 und damit das Anschlagelement ist jeweils durch einen Ansatz 13 auf einer Führungsfläche 14 gehalten und geführt. Auf der Tischebene befinden sich Öffnungen 18, aus denen Luft aus einer darunter befindlichen Druckkammer 19 entweicht und ein Luftpolster für die aufeinanderliegenden Scheiben 1,2 bildet.

Sobald die Scheiben unter der Wirkung der andrückenden Anschlagelemente 10,12 die zentrierte, d. h. die Soll-Lage erreicht haben und diese Anschlagelemente bzw. die Antriebe 9,11 einen größeren Widerstand vorfinden, der ein weiteres Vorrücken verhindert, werden die Antriebe 9,11 stillgesetzt.

Mindestens bei der einen Vorschubrichtung, hier bei den Kegelrollen 12 (Figur 3) ist oberhalb und unterhalb des Anschlagelements je ein ebenfalls auf der Kolbenstange 15 angeordneter Bügel 16 vorgesehen. An diesen Bügeln 16 sind durch hydraulische oder sonstige an sich bekannte Antriebsmittel bewegbare Druckstifte 17 oder dergleichen vorgesehen. Diese Stifte werden von oben und unten her gegen die Scheiben 1,2 angedrückt, sobald die Antriebe 9,12 stillgesetzt sind, und halten die zentrierten Scheiben in dieser ihrer Soll-Lage fest. Alsdann wird, ausgelöst durch an sich bekannte Steuermittel, der Rahmen 6 der Transporteinrichtung 4 eingeschaltet und senkt sich auf die zentrierten Scheiben herab. Diese werden von den Greif- und Halteelementen 7,8 erfaßt. Nach Lösen der Druckstifte 17 werden die zentrierten Scheiben dann unter Beibehaltung ihrer zentrierten Soll-Lage durch die Transporteinrichtung 4 angehoben und gemäß den in Figur 1 gestrichelt gezeichneten Pfeilen auf eine bereits in der richtigen Lage befindliche, an sich bekannte Form 20 gelegt. Auf dieser Form werden dann die Scheiben in an sich bekannter Weise in einen nicht näher dargestellten Biegeofen gebracht.

Im Rahmen der Erfindung ist die beschriebene Vorrichtung, wie leicht zu erkennen ist, in vielfacher Hinsicht variierbar. So können für die sich längs den Scheibenrändern erstreckenden Anschlagelemente mehrere, parallel wirkende Antriebe vorgesehen sein. Die Antriebe können in verschiedener Weise, nicht nur als Hubmotore, sondern beispielsweise auch als Spindeltriebe ausgebildet sein. Die Vorrichtung ist grundsätzlich auch anwendbar zum Zentrieren sonstiger Scheiben und Platten, die unterschiedliche Flächen mit gleicher Umrißform aufweisen. Die Erfindung ist daher nicht auf die dargestellten Ausführungsbeispiele beschränkt.

Patentansprüche

1. Verfahren zum Zentrieren von zwei aufeinanderliegenden Glasscheiben mit gleicher Umrißform,
von denen die eine eine etwas kleinere Fläche
hat als die andere, die für das Biegen zwecks
Herstellen von Windschutzscheiben aus Verbundglas relativ zueinander derart verschoben werden, daß der Rand am Umfang der einen Scheibe
einen vom Rand der anderen Scheibe mindestens
im Biegebereich überall ungefähr gleichen Abstand aufweist, dadurch gekennzeichnet, daß
auf einer horizontalen Fläche die kleinere
auf die größere Scheibe aufgelegt wird und an
jeweils gegenüberliegenden Stellen des Umfangs
mindestens in einer Richtung gegen die Scheibenränder eine schräg zu den Scheiben hingeneigte Anschlagkante oder -fläche angedrückt
wird, deren Schrägneigung der Tangente an die
beiden jeweiligen Oberkanten der Scheibenränder
in zentrierter Lage entspricht.

2. Verfahren nach Anspruch 1, dadurch gekennzeichnet, daß die Scheiben nach dem Andrücken der Anschlagkanten oder -flächen bei Erreichen der zentrierten Lage gegeneinandergepresst und im aneinandergepressten Zustand gehalten werden.

3. Vorrichtung zur Durchführung des Verfahrens nach
Anspruch 1, gekennzeichnet durch einen Auflagetisch (5) für die Scheiben (1,2), auf dessen Oberfläche jeweils von gegenüberliegenden Stellen des
Tischrandes je ein Anschlagelement (10,12) durch
mindestens einen steuerbaren Antrieb (9,11) in
Richtung von außen nach innen zur Tischmitte hin-
und zurückbewegbar ist, das eine zur Tischmitte
geneigte Anschlagfläche oder -kante aufweist, deren
Neigung ($\alpha$) der Tangente an die Oberkante der Ränder der in der zentrierten Lage befindlichen beiden Scheiben (1,2) entspricht.

4. Vorrichtung nach Anspruch 3, dadurch gekennzeichnet, daß in zwei quer zueinander verlaufenden Vorschubrichtungen jeweils zwei in der Tischebene aufeinanderzu- und voneinanderwegbewegbare Anschlagelemente (10,12) vorgesehen sind.

5. Vorrichtung nach Anspruch 3 oder 4, dadurch gekennzeichnet, daß die Anschlagelemente (10,12) auswechselbar an den Antrieben (9,11) befestigt sind.

6. Vorrichtung nach Anspruch 3 oder folgenden, dadurch gekennzeichnet, daß das Anschlagelement gebildet ist durch eine Kegelrolle (12), die mit ihrer Lagerung, gesteuert durch den Antrieb (11) in einer Führung (14) von der Tischaußenseite zur Tischmitte hin- und herbewegbar ist.

7. Vorrichtung nach Anspruch 3 oder folgenden, dadurch gekennzeichnet, daß das Anschlagelement gebildet ist durch eine quer zur Vorschubrichtung sich erstreckenden Leiste (10).

8. Vorrichtung nach Anspruch 3 oder folgenden, dadurch gekennzeichnet, daß mindestens eines der Anschlagelemente (12) mit einer zusammen mit ihm bewegbaren Klemmeinrichtung (16,17) für die Scheiben (1,2) verbunden ist.

9. Vorrichtung nach Anspruch 3 oder folgenden, dadurch gekennzeichnet, daß in der Tischebene mit einer Druckgasquelle (19) verbindbare Gasaustrittsöffnungen (18) zur Erzeugung eines Luftpolsters vorgesehen sind.

Fig.1

Fig.2

Fig. 3

Fig.4

0136432

## EINSCHLÄGIGE DOKUMENTE

EP 84108515.2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - A1 - 2 608 764 (SAINT-GOBAIN INDUSTRIES)<br><br>* Seite 1, Zeilen 1-10;<br>Seite 4, Zeile 17 - Seite 5,<br>Zeile 12; Fig. 1,2 *<br><br>-- | 1-4,6 | C 03 B 23/02<br><br>B 65 H 31/34 |
| A | DE - A1 - 3 124 972 (LIBBEY-OWENS-FORD CO.)<br><br>* Patentansprüche 1-6; Fig.<br>1,2,8 *<br><br>---- | 1,3,4,<br>6 | |

| RECHERCHIERTE SACHGEBIETE (Int. Cl.4) |
|---|
| C 03 B<br><br>B 24 B<br><br>B 32 B<br><br>B 65 H |

Der vorliegende Recherchenbericht wurde für alle Patentansprüche erstellt.

| Recherchenort<br>WIEN | Abschlußdatum der Recherche<br>30-10-1984 | Prüfer<br>HAUSWIRTH |
|---|---|---|

KATEGORIE DER GENANNTEN DOKUMENTEN
X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
     nach dem Anmeldedatum veröffentlicht worden ist
D : in der Anmeldung angeführtes Dokument
L : aus andern Gründen angeführtes Dokument

& : Mitglied der gleichen Patentfamilie, überein-
     stimmendes Dokument

EPA Form 1503 03.82